# EUROPÄISCHE PATENTSCHRIFT

(11) **EP 2 851 174 B1**
(45) Veröffentlichungstag und Bekanntmachung des Hinweises auf die Patenterteilung: **09.11.2016**
(21) Anmeldenummer: 13184969.7
(22) Anmeldetag: 18.09.2013
(51) Int. Cl.: B29C 45/17, B29C 44/04, B29C 44/08, B29L 31/30

(54) **VERFAHREN ZUR HERSTELLUNG EINES TÜRAUSSENGRIFFS FÜR EIN KRAFTFAHRZEUG UND TÜRAUSSENGRIFF**
METHOD FOR PRODUCING A DOOR HANDLE FOR A VEHICLE AND DOOR HANDLE
PROCEDE DE FABRICATION D'UN POIGNEE EXTERIEURE DE PORTE POUR VEHICULES ET POIGNEE EXTERIEURE DE PORTE

(43) Veröffentlichungstag der Anmeldung: 25.03.2015
(73) Patentinhaber: Witte Automotive GmbH, 42551 Velbert (DE)
(72) Erfinder: Ralf Höhn, 42549 Velbert (DE); Reimar Lawin, 42759 Heiligenhaus (DE)
(74) Vertreter: Manitz, Finsterwald & Partner GbR

(56) Entgegenhaltungen:
- EP-A2- 0 512 818
- DE-A1-102005 022 791
- DE-B3-102004 038 569
- JP-A- H1 015 983
- JP-A- 2000 094 468
- JP-A- 2003 127 191
- US-A- 5 789 063

## Beschreibung

Die vorliegende Erfindung betrifft ein Verfahren zur Herstellung eines eines Türaußengriffs für ein Kraftfahrzeug, nach dem Oberbegriff des Anspruchs 1 (vgl. JP 2003 127191 A oder JP 2000 094468 A) und einen Türaußenangriff.

Ein weiteres Verfahren ist beispielsweise aus der DE 10 2004 038 569 B3 bekannt. Bei diesem bekannten Verfahren wird ein Kunststoff-Spritzguss-Trägerkern mit einer Schaumstruktur erzeugt, indem ein Gas, beispielsweise Stickstoff oder Kohlendioxid, im überkritischen Zustand in das geschmolzene Kunststoffmaterial eingegeben wird und durch eine Spritzgießmaschine in eine Form eingespritzt wird. In der Gussform schäumt der Kunststoff auf und härtet nach einem Abkühlen, wodurch eine feinzellige Schaumstruktur bei geringer Dichte erzielt wird.

Es ist die Aufgabe der folgenden Erfindung, ein Verfahren nach dem Oberbegriff des Anspruchs 1 derart weiterzubilden, dass bei geringerem Materialverbrauch ein Bauteil mit einem Griff und einem hinteren Ausleger geschaffen werden kann, der stabil ist und hohen Zugkräften widersteht.

Die Lösung dieser Aufgabe erfolgt durch die Merkmale des Anspruchs 1.

Grundsätzlich ist es aus dem Stand der Technik bei so genannten Gasinnendruckverfahren bekannt, Gas in das Innere einer Gussform einzublasen, um innerhalb des Gussteils einen Hohlraum zu erzeugen. Durch die erfindungsgemäße Kombination des Einblasens von Gas in ein physikalisch aufschäumbares Kunststoffmaterial wird jedoch kein dauerhaft vorhandener Hohlraum erzeugt. Es wird vielmehr nur temporär ein freies Volumen geschaffen, das durch ein Aufschäumen des nicht in die Nebenkavität ausgebrachten Kunststoffmaterials wieder gefüllt wird.

Die Erfindung beruht auf der Erkenntnis, dass das Schäumungspotential von mit physikalischem Treibmittel versehenem thermoplastischem Kunststoff außerordentlich groß ist, so dass auch nach Anhärten des Kunststoffmaterials in einem äußeren Randbereich der Gussform und auch nach Ausbringen der fließfähigen Seele des Kunststoffmaterials in eine Nebenkavität der auf diese Weise geschaffene Hohlraum als freies Volumen für das Aufschäumen des noch in der Gussform befindlichen Kunststoffmaterials herangezogen werden kann. Wenn andererseits für das Kunststoffmaterial ein zusätzliches Schäumvolumen geschaffen wird, ist das finale Kunststoffprodukt nach einem Aushärten sehr leichtgewichtig und weist eine geringe Dichte auf.

Mit dem erfindungsgemäßen Herstellungsverfahren lassen sich Kunststoffbauteile aus thermoplastischem Kunststoffmaterial herstellen, die keine Einfallstellen und eine nur geringe Gratbildung aufweisen. Der Materialverbrauch und die Anzahl an Ausschuss können reduziert werden.

Nach der Erfindung wird eine Gussform verwendet, die einen Griffabschnitt und einen hinteren Auslegerabschnitt umfasst, wobei nach einem Aufschäumen des noch in der Gussform befindlichen Kunststoffmaterials erneut Gas in das Innere der Gussform eingeblasen wird, um die jetzt noch fließfähige Seele des aufgeschäumten Kunststoffmaterials von dem Griffabschnitt in den hinteren Auslegerabschnitt auszubringen, und um im Griffabschnitt erneut temporär ein freies Volumen für das Aufschäumen des dort noch befindlichen und noch nicht angehärteten bzw. ausgehärteten Kunststoffmaterials zu schaffen.

Bei diesem Verfahren wird durch das Ausbringen des Kunststoffmaterials in den hinteren Ausleger dieser vollständig mit Kunststoffmaterial gefüllt, so dass das im hinteren Auslegerabschnitt befindliche Kunststoffmaterial eine vergleichsweise hohe Dichte jedoch keine Lufteinschlüsse aufweist. Aufgrund des geringen Volumens des hinteren Auslegerabschnitts ist in diesem nur ein begrenztes Aufschäumen möglich, so dass der hintere Ausleger des finalen Produkts sehr stabil ist und die Anforderungen an eine Zugkraft von mindestens 1000 N erfüllen kann.

Vorteilhafte Ausführungsformen der Erfindung sind in der Beschreibung, der Zeichnung sowie den Unteransprüchen beschrieben.

Nach einer ersten vorteilhaften Ausführungsform kann das Gas zwischen den Verfahrensschritten b) und c) in das Innere der Gussform eingeblasen werden. Auf diese Weise wird erreicht, dass das Kunststoffmaterial noch vor einem ursprünglichen Aufschäumen in die Nebenkavität ausgebracht wird, so dass das ausgebrachte Kunststoffmaterial in der Nebenkavität eine vergleichsweise hohe Dichte aufweist.

Nach einer weiteren vorteilhaften Ausführungsform kann zwischen etwa 20 und 40 %, insbesondere zwischen etwa 25 und etwa 35 % und insbesondere etwa 30 % des in die Gussform eingebrachten Volumens an Kunststoffmaterial in die Nebenkavität ausgebracht werden. Hierdurch wird ein außerordentlich hoher Anteil, der im Übrigen wiederverwendbar ist, in die Nebenkavität ausgebracht, so dass das entsprechende Volumen als freies Volumen für das Aufschäumen des in der Gussform verbliebenen Kunststoffmaterials zur Verfügung steht. Hierdurch lässt sich ein sehr homogenes Kunststoffbauteil mit geringer Dichte herstellen.

Um ein besonders gutes Verdichten des Kunststoffmaterials in dem hinteren Auslegerabschnitt zu erreichen, kann die Nebenkavität vor dem erneuten Einblasen von Gas verschlossen werden. Dieses Verschließen kann beispielsweise durch ein Ventil erfolgen. Nach einer besonders einfachen Ausführungsvariante kann jedoch das Kunststoffmaterial durch einen reduzierten Querschnitt in die Nebenkavität geleitet werden, so dass das in diesem reduzierten Querschnitt vorhandene Kunststoffmaterial durch Abkühlen aushärtet, so dass die Nebenkavität verschlossen ist.

Nach einer weiteren vorteilhaften Ausführungsform kann eine Gussform verwendet werden, die auch einen vorderen Auslegerabschnitt umfasst, wobei das Gas aus dem Bereich des vorderen Auslegerabschnitts in Richtung des hinteren Auslegerabschnitts eingeblasen wird. Erfindungsgemäß wird unter einem vorderen Ausleger bei einem Türaußengriff eines Kraftfahrzeugs derjenige Ausleger verstanden, der das Scharnier des Türaußengriffs bildet, während unter einem hinteren Ausleger der am entgegengesetzten Ende des Türaußengriffs vorhandene Ausleger verstanden wird, der beim Betätigen des Türaußengriffs die Öffnungsbewegung begrenzt. Üblicherweise wird der Türaußengriff dabei mit dem vorderen Ausleger in Fahrtrichtung montiert. Es versteht sich jedoch, dass - beispielsweise bei Fahrzeugen ohne B-Säule - auch eine Montage des Türaußengriffs in Frage kommt, bei welcher der vordere Ausleger in Richtung des Hecks orientiert ist.

Wenn bei der vorstehend beschriebenen Verfahrensvariante das Gas aus dem Bereich des vorderen Auslegerabschnitts in Richtung des hinteren Auslegerabschnitts eingeblasen wird, so kann auf vorteilhafte Weise das Kunststoffmaterial innerhalb der Gussform in den hinteren Auslegerabschnitt, der einen sehr geringen Querschnitt und ein geringes Volumen aufweist, eingetragen werden, so dass dieser hintere Auslegerabschnitt vollständig und homogen mit Kunststoffmaterial gefüllt ist.

Nach einer weiteren vorteilhaften Ausführungsform wird nach dem erneuten Einblasen von Gas nochmals ein Aufschäumen des in dem Griffabschnitt befindlichen Kunststoffmaterials bewirkt, beispielsweise indem der Druck innerhalb der Gussform über einen vorbestimmten Zeitraum gehalten oder auch leicht abgesenkt wird. Auch hier wird ausgenutzt, dass trotz der reduzierten Kunststoffmasse innerhalb des Griffteils das mit physikalischem Treibmittel versehene Kunststoffmaterial ein noch außerordentlich hohes Schäumungspotential besitzt, so dass das noch in dem Griffabschnitt befindliche und noch nicht vollständig ausgehärtete Kunststoffmaterial nachschäumen kann, wodurch sich das zuvor ausgeblasene Volumen wiederum mit Kunststoffmaterial füllt, welches von feinen Gasblasen bzw. Poren durchzogen ist.

Nach einer weiteren vorteilhaften Ausführungsform kann eine Öffnung, durch die das Gas in das Griffteil eingeblasen wird, nach dem erneuten Aufschäumen und nach dem Aushärten des aufgeschäumten Kunststoffmaterials in dem Griffabschnitt durch das ausgehärtete Kunststoffmaterial verschlossen werden. Dies bedeutet, dass für das Verschließen einer Gaseinlassöffnung in einem Fahrzeuggriff - im Gegensatz zum herkömmlichen Gasinnendruckverfahren - kein separater Vorgang erforderlich ist, mit dem die Gaseinlassöffnung verschlossen wird. Ein Verschließen kann erforderlich sein, um ein Eindringen von Wasser vor einem Lackieren zu verhindern. Bei dem erfindungsgemäßen Verfahren wird jedoch sowohl die Gaseinlassöffnung wie auch die Öffnung, die eine Verbindung zwischen dem hinteren Ausleger und der Nebenkavität herstellt, durch das aufgeschäumte und ausgehärtete Kunststoffmaterial vollständig verschlossen, wodurch sich die Kosten für einen separaten Verschließvorgang vermeiden lassen.

Mit dem erfindungsgemäßen Verfahren lassen Türaußengriffe für ein Fahrzeug herstellen, bei denen das Griffteil keinen Hohlkern aufweist, d.h. das Griffteil ist abgesehen von Poren oder kleineren Lufteinschlüssen vollständig gefüllt. Hierdurch lässt sich ein Füllfaktor im Bereich des Griffteils von mindestens 65 %, vorzugsweise mindestens 75 % und insbesondere mindestens 85 % oder mehr erreichen. Weiterhin kann ein Türaußengriff produziert werden, der einen hinteren Ausleger aufweist, der eine höhere Dichte als der Griffteil besitzt.

Schließlich lässt sich auf sehr kostengünstige Weise ein Türaußengriff herstellen, der in einem einzigen Prozess hergestellt wird, ohne dass - abgesehen von einer wahlweise vorgesehenen Lackierung - eine weitere äußere Deckschicht aufgebracht werden müsste.

Nachfolgend wird die vorliegende Erfindung rein beispielhaft anhand einer vorteilhaften Ausführungsform unter Bezugnahme auf die beigefügten Zeichnungen beschrieben. Es zeigen:
- Fig. 1: einen Querschnitt durch eine Gussform mit einem vorderen Auslegerabschnitt, einem Griffabschnitt und einem hinteren Auslegerabschnitt, wobei die Gussform mit Kunststoffmaterial gefüllt ist;
- Fig. 2: die Gussform von Fig. 1, wobei etwa ein Drittel des Volumens an Kunststoffmaterial in eine Nebenkavität ausgetragen worden ist;
- Fig. 3: die Gussform von Fig. 2, wobei das freigeblasene Gasvolumen durch Aufschäumen des in der Gussform befindlichen Kunststoffmaterials wieder gefüllt ist;
- Fig. 4: die Gussform von Fig. 3, nachdem Kunststoffmaterial in den hinteren Auslegerabschnitt ausgetragen wurde; und
- Fig. 5: die Gussform von Fig. 4, nachdem sich das zuvor freigeblasene Volumen innerhalb des Griffteils durch Aufschäumen wieder mit Kunststoffmaterial gefüllt hat.

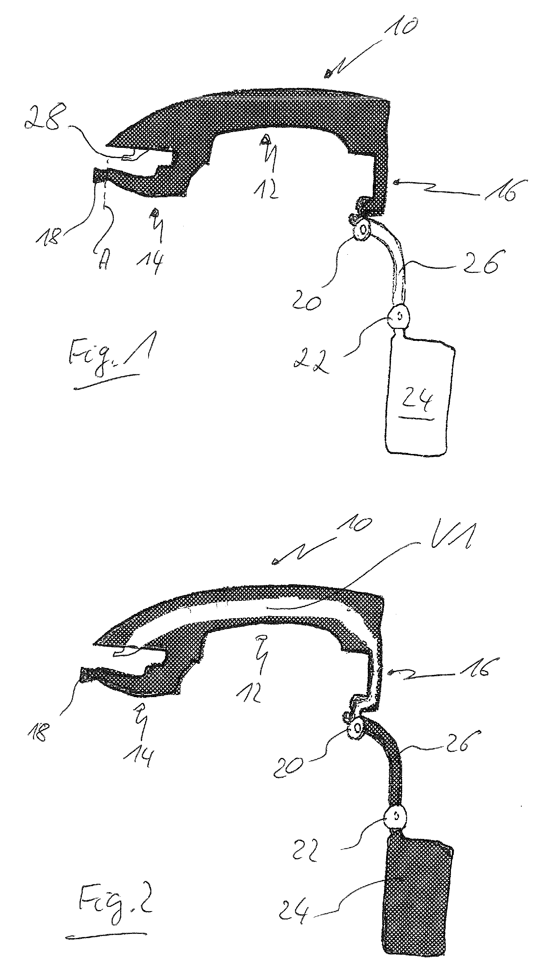

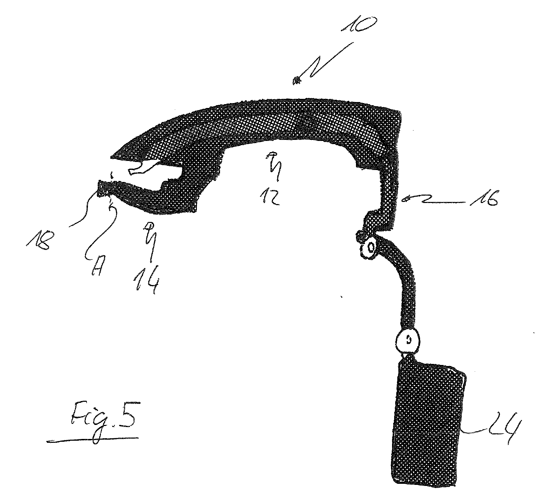

Fig. 1 bis Fig. 5 zeigen rein schematisch und beispielhaft eine Gussform 10 für einen Türaußengriff, wobei die Gussform einen Griffabschnitt 12 aufweist, an dessen einem Ende ein vorderer Auslegerabschnitt 14 und an dessen anderem Ende ein hinterer Auslegerabschnitt 16 angeordnet ist. Bei einem fertigen Türaußengriff dient der vordere Ausleger als Scharnier bzw. Gelenk, wohingegen der wesentlich dünnere hintere Ausleger als Auszugsbegrenzung dient.

Bei der Gussform 10 ist am vorderen Ende des vorderen Auslegerabschnitts 14 ein Anguss 18 vorgesehen, durch den thermoplastisches Kunststoffmaterial im erwärmten Zustand als Schmelze in die Gussform 10 eingebracht wird. Der Anguss 18 wird nach vollständigem Abkühlen und nach Entnahme des Bauteils aus der Gussform entlang der Linie A abgetrennt.

Am unteren Ende des hinteren Auslegerabschnitts 16 ist die Gussform 10 über ein erstes Ventil 20 und ein zweites Ventil 22 mit einer Nebenkavität 24 verbunden, wobei sich zwischen den beiden Ventilen 20 und 22 ein Strömungskanal 26 mit reduziertem Querschnitt erstreckt. Ferner ist im Bereich des vorderen (in Fig. 1 linken) Endes des Griffabschnitts 12 der Gussform 10 ein Gasanschluss 28 vorgesehen, durch den Gas (z.B. Luft) unter Druck in die Gussform 10 eingeführt werden kann.

Nachfolgend wird anhand der Fig. 1 bis Fig. 5 das erfindungsgemäße Verfahren zur Herstellung eines Kunststoffbauteils beschrieben, wobei zur beispielhaften Darstellung auf einen Türaußengriff für ein Kraftfahrzeug Bezug genommen wird.

Bevor das erwärmte Kunststoffmaterial als Schmelze in die Gussform 10 eingebracht wird, wird dieses auf an sich bekannte Weise mit einem Gas (beispielsweise Stickstoff) im überkritischen Zustand versehen und dieses so präparierte Kunststoffmaterial wird über den Anguss 18 in die Gussform 10 eingebracht, so dass der vordere Auslegerabschnitt 14, der hintere Auslegerabschnitt 16 und der diese verbindende Griffabschnitt 12 gefüllt sind. Das Ventil 20 ist zu diesem Zeitpunkt noch geschlossen.

Nach einem Anhärten des Kunststoffmaterials in einem äußeren Randbereich der Gussform wird über den Gasanschluss 28 Gas in das Innere der Gussform eingeblasen (vgl. Fig. 2), wodurch die noch fließfähige Seele des Kunststoffmaterials in die Nebenkavität 24 ausgebracht bzw. ausgetragen wird. Hierdurch wird innerhalb des Griffabschnitt 12 und innerhalb des hinteren Auslegerabschnitts 16 temporär ein freies Volumen V1 geschaffen, das dazu herangezogen wird, das noch in der Gussform befindliche Kunststoffmaterial, das noch nicht ausgehärtet ist, aufschäumen zu lassen. Dies kann durch eine entsprechende Zeit- und Drucksteuerung erreicht werden. Für ein Aufschäumen des Kunststoffmaterials in der Gussform steht hierdurch ein Volumen V1 zur Verfügung, das etwa 30 % des Gesamtvolumens an zuvor eingebrachtem Kunststoffmaterial betragen kann.

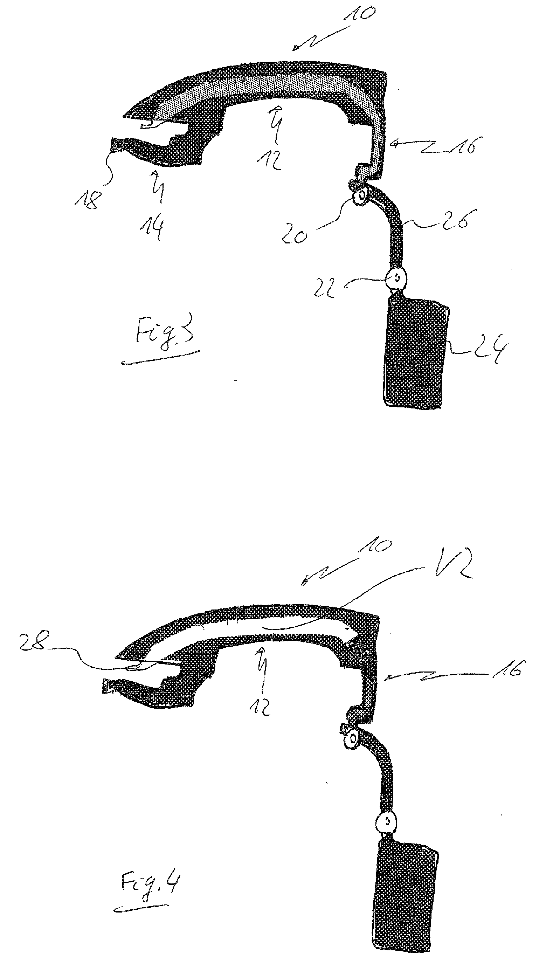

Fig. 3 verdeutlicht den Zustand nach Aufschäumen des Kunststoffmaterials. Wie man erkennen kann, ist das gesamte Volumen V1 innerhalb des Griffabschnitts 12 und innerhalb des hinteren Auslegerabschnitts 16 wieder mit aufgeschäumten Kunststoffmaterial ausgefüllt, wobei jedoch zuvor durch den Anguss 18 kein weiteres Kunststoffmaterial in die Gussform 10 eingebracht wurde. Allerdings wurde vor dem Aufschäumen die Nebenkavität 24 verschlossen, indem das Ventil 20 geschlossen wurde oder indem ein Aushärten des Kunststoffmaterials in dem Strömungskanal 26 einen entsprechenden Verschluss bewirkt.

In dem sich anschließenden Verfahrensschritt, der in Fig. 4 dargestellt ist, wird nach einem Aufschäumen des noch in der Gussform 10 befindlichen Kunststoffmaterials (Fig. 3) erneut Gas durch den Gasanschluss 28 in das Innere der Gussform 10 eingeblasen und zwar aus dem Bereich des vorderen Auslegerabschnitts 14, in dessen Nähe sich der Gasanschluss 28 befindet, durch den Griffabschnitt 12 in Richtung des hinteren Auslegerabschnitts 16, so dass das Kunststoffmaterial im Bereich des hinteren Auslegerabschnitts 16 verdichtet wird bzw. in diesen Abschnitt hineingedrückt wird und diesen vollständig ohne Lufteinschlüsse (abgesehen von Poren) ausfüllt. Hierdurch ist im Bereich des Griffteils 12 erneut vorübergehend ein freies Volumen V2 geschaffen worden, das dem in dem Griffabschnitt 12 befindlichen Kunststoffmaterial, das noch nicht ausgehärtet ist, ein erneutes Aufschäumen ermöglicht. Auch hier wird das Aufschäumen durch entsprechende Zeit- und Drucksteuerung erzielt und zwar derart, dass nicht nur der vordere Auslegerabschnitt 14 sondern auch der Griffabschnitt 12 und auch der hintere Auslegerabschnitt 16 vollständig mit geschäumtem Kunststoffmaterial gefüllt sind.

Nach vollständigem Abkühlen des Kunststoffmaterials in der Gussform kann der Türaußengriff aus der Gussform entnommen werden. Für eine Fertigstellung des Produkts muss dann lediglich der Anguss 18 entfernt werden und eine optionale Lackierung kann auf das Bauteil aufgebracht werden.

## Patentansprüche

1. Verfahren zur Herstellung eines Türaußengriffs für ein Kraftfahrzeug, umfassend die folgenden Schritte:
a) Einbringen eines Schaummittels in ein geschmolzenes Kunststoffmaterial,
b) Einbringen dieses Kunststoffmaterials in eine Gussform (10),
c) Aufschäumen des Kunststoffmaterials in der Gussform (10),
d) Abkühlen des Kunststoffmaterials in der Gussform (10),
wobei nach einem Anhärten des Kunststoffmaterials in einem äußeren Randbereich der Gussform (10) Gas in das Innere der Gussform eingeblasen wird, um die noch fließfähige Seele des Kunststoffmaterials in eine Nebenkavität (24) auszubringen und dadurch temporär ein freies Volumen (V1) für das Aufschäumen des noch in der Gussform (10) befindlichen Kunststoffmaterials zu schaffen,
**dadurch gekennzeichnet, dass**
das Schaummittel ein Gas im überkritischen Zustand ist, und
dass eine Gussform verwendet wird, die einen Griffabschnitt (12) und einen hinteren Auslegerabschnitt (16) umfasst, und dass nach einem Aufschäumen des noch in der Gussform (10) befindlichen Kunststoffmaterials erneut Gas in das Innere der Gussform (10) eingeblasen wird, um die noch fließfähige Seele des zuvor aufgeschäumten Kunststoffmaterials von dem Griffabschnitt (12) in den hinteren Auslegerabschnitt (16) auszubringen und um im Griffabschnitt (12) erneut temporär ein freies Volumen (V2) für das Aufschäumen des dort noch befindlichen Kunststoffmaterials zu schaffen.

2. Verfahren nach Anspruch 1,
**dadurch gekennzeichnet, dass**
das Gas zwischen den Verfahrensschritten b) und c) in das Innere der Gussform (10) eingeblasen wird.

3. Verfahren nach Anspruch 1 oder 2,
**dadurch gekennzeichnet, dass**
zwischen etwa 20 und 40%, insbesondere zwischen etwa 25 und 35% und insbesondere etwa 30% des in die Gussform eingebrachten Volumens an Kunststoffmaterial in die Nebenkavität (24) ausgebracht wird.

4. Verfahren nach Anspruch 1,
**dadurch gekennzeichnet, dass**
die Nebenkavität (24) vor dem erneuten Einblasen von Gas verschlossen wird.

5. Verfahren nach Anspruch 1 oder 4,
**dadurch gekennzeichnet, dass**
eine Gussform (10) verwendet wird, die auch einen vorderen Auslegerabschnitt (14) umfasst, und dass das Gas durch den Griffabschnitt (12) aus dem Bereich des vorderen Auslegerabschnitts (14) in Richtung des hinteren Auslegerabschnitts (16) eingeblasen wird.

6. Verfahren nach zumindest einem der vorstehenden Ansprüche 1, 4 oder 5,
**dadurch gekennzeichnet, dass**
nach dem erneuten Einblasen von Gas erneut ein Aufschäumen des in dem Griffabschnitt (12) befindlichen Kunststoffmaterials bewirkt wird.

7. Verfahren nach Anspruch 6,
**dadurch gekennzeichnet, dass** eine Öffnung, durch die das Gas eingeblasen wird, nach dem erneuten Aufschäumen und Aushärten des in dem Griffabschnitt (12) befindlichen Kunststoffmaterials durch dieses verschlossen wird.

8. Türaußengriff für ein Fahrzeug, umfassend ein Griffteil und einen hinteren Ausleger, hergestellt nach einem Verfahren nach einem der Ansprüche 1-7,
wobei
das Griffteil keinen Hohlkern aufweist, d.h. abgesehen von Poren zu mindestens 65%, insbesondere zu mindestens 75% und insbesondere zu mindestens 85% mit Kunststoffmaterial gefüllt ist, und
der hintere Ausleger eine höhere Dichte als das Griffteil aufweist.

9. Türaußengriff nach Anspruch 8, wobei dieser abgesehen von einer wahlweise vorgesehenen Lackierung keine äußere Deckschicht aufweist.

10. Türaußengriff nach zumindest einem der Ansprüche 8 oder 9, wobei eine Öffnung, durch die bei der Herstellung Gas in das Griffteil eingeblasen wurde, durch das aufgeschäumte und ausgehärtete Kunststoffmaterial verschlossen ist.

## Claims

1. A method of manufacturing an
outside door handle for a motor vehicle,
comprising the following steps:
a) introducing a foaming agent into a melted plastic material;
b) introducing this plastic material into a mold (10);
c) foaming the plastic material in the mold (10); and
d) cooling the plastic material in the mold (10),
wherein, after an initial hardening of the plastic material in an outer margin region of the mold (10), gas is blown into the interior of the mold to expel the still viscous core of the plastic material into a secondary cavity (24) and thereby temporarily to provide a free volume (V1) for the foaming of the plastic material which is still located in the mold (10),
**characterized in that**
the foaming agent is a gas in a hypercritical state; and
**in that** a mold is used which comprises a gripping section (12) and a rear arm section (16); and **in that**, after a foaming of the plastic material which is still located in the mold (10), gas is again blown into the interior of the mold (10) to expel the still viscous core of the previously foamed plastic material from the gripping section (12) into the rear arm section (16) and in order again temporarily to provide a free volume (V2) in the gripping section (12) for the foaming of the plastic material which is still located there.

2. A method in accordance with claim 1,
**characterized in that**
the gas is blown into the interior of the mold (10) between method steps b) and c).

3. A method in accordance with claim 1 or claim 2,
**characterized in that**
between approximately 20 and 40%, in particular between approximately 25 and 35% and in particular approximately 30%, of the volume of plastic material introduced into the mold is expelled into the secondary cavity (24).

4. A method in accordance with claim 1,
**characterized in that**
the secondary cavity (24) is closed before gas is blown in again.

5. A method in accordance with claim 1 or claim 4,
**characterized in that**
a mold (10) is used which also comprises a front arm section (14); and **in that** the gas is blown in through the gripping section (12) from the region of the front arm section (14) in the direction of the rear arm section (16).

6. A method in accordance with at least one of the preceding claims 1, 4 or 5, **characterized in that**,
after gas is blown in again, a foaming of the plastic material located in the gripping section (12) is again effected.

7. A method in accordance with claim 6,
**characterized in that**,
an opening through which the gas is blown in is closed by the plastic material located in the gripping section (12) after foaming and hardening said plastic material again.

8. An outside door handle for a vehicle, comprising a gripping part and a rear arm, manufactured in accordance with a method in accordance with any one of the claims 1-7,
wherein
the gripping part does not have a hollow core, i.e. it is filled to at least 65%, in particular to at least 75% and in particular to at least 85%, with plastic material, with the exception of pores, and the rear arm has a higher density than the gripping part.

9. An outside door handle in accordance with claim 8,
wherein,
apart from a selectively provided coating, it does not have an outer top layer.

10. An outside door handle in accordance with at least one of the claims 8 or 9,
wherein
an opening, through which gas was blown into the gripping part in the manufacture, is closed by the foamed and hardened plastic material.

## Revendications

1. Procédé de fabrication d'une poignée extérieure de porte de véhicule automobile, comportant les étapes suivantes :
a) introduction d'un agent moussant dans une matière plastique fondue,
b) introduction de cette matière plastique dans un moule (10),
c) moussage de la matière plastique dans le moule (10),
d) refroidissement de la matière plastique dans le moule (10),
dans lequel, après un durcissement de la matière plastique dans une zone de bord extérieure du moule (10), on insuffle du gaz à l'intérieur du moule pour chasser l'âme encore fluide de la matière plastique vers une cavité annexe (24) et pour créer ainsi temporairement un volume (V1) libre pour le moussage de la matière plastique qui se trouve encore dans le moule (10),
**caractérisé en ce que**
l'agent moussant est un gaz à l'état surcritique, et **en ce qu'**on utilise un moule qui comprend un tronçon de poignée (12) et un tronçon de bras (16) postérieur, et **en ce qu'**après un moussage de la matière plastique se trouvant encore dans le moule (10) on insuffle de nouveau du gaz dans l'intérieur du moule (10) pour chasser l'âme encore fluide de la matière plastique auparavant moussée depuis le tronçon de poignée (12) jusque dans le tronçon de bras (16) postérieur et pour créer dans le tronçon de poignée (12) à nouveau temporairement un volume (V2) libre pour le moussage de la matière plastique qui s'y trouve encore.

2. Procédé selon la revendication 1, **caractérisé en ce que** le gaz est insufflé dans l'intérieur du moule (10) entre les étapes de procédé b) et c).

3. Procédé selon la revendication 1 ou 2, **caractérisé en ce qu'**entre approximativement 20 et 40 %, en particulier entre approximativement 25 et 35 % et en particulier approximativement 30 % du volume de matière plastique introduite dans le moule est chassé vers la cavité annexe (24).

4. Procédé selon la revendication 1, **caractérisé en ce que** la cavité annexe (24) est fermée avant que l'on insuffle de nouveau du gaz.

5. Procédé selon la revendication 1 ou 4, **caractérisé en ce qu'**on utilise un moule (10) qui comprend aussi un tronçon de bras (14) antérieur et **en ce qu'**on insuffle le gaz à travers le tronçon de poignée (12) depuis la zone du tronçon de bras antérieur (14) en direction du tronçon de bras (16) postérieur.

6. Procédé selon au moins l'une des revendications précédentes 1, 4 ou 5, **caractérisé en ce qu'**après la nouvelle insufflation de gaz, on effectue de nouveau un moussage de la matière plastique se trouvant dans le tronçon de poignée (12).

7. Procédé selon la revendication 6, **caractérisé en ce qu'**une ouverture, à travers laquelle on insuffle le gaz, est fermée par la matière plastique, après nouveau moussage et durcissement de cette matière plastique se trouvant dans le tronçon de poignée (12).

8. Poignée extérieure de porte pour un véhicule automobile, comprenant une partie de poignée et un bras postérieur, fabriquée conformément à un procédé selon l'une des revendications 1 à 7,
dans laquelle la partie de poignée ne présente pas de noyau creux, c'est-à-dire qu'exception faite de pores, elle est remplie d'au moins 65 %, en particulier d'au moins 75 % et en particulier d'au moins 85 % de matière plastique, et le bras postérieur présente une densité plus élevée que la partie de poignée.

9. Poignée extérieure de porte selon la revendication 8, dans laquelle celle-ci, exception faite d'un laquage prévu en option, ne présente pas de couche de revêtement extérieure.

10. Poignée extérieure de porte selon au moins l'une des revendications 8 ou 9, dans laquelle une ouverture à travers laquelle du gaz est insufflé dans la partie de poignée pendant la fabrication, est fermée par la matière plastique moussée et durcie.
